# EUROPÄISCHE PATENTSCHRIFT

(11) **EP 1 057 930 B1**
(45) Veröffentlichungstag und Bekanntmachung des Hinweises auf die Patenterteilung: **15.10.2003**
(21) Anmeldenummer: 00107310.5
(22) Anmeldetag: 04.04.2000
(51) Int. Cl.: D21G 1/02

(54) **Elastische Walze und Verfahren zum Herstellen einer solchen**
Soft roll and process for making such a roll
Rouleau élastique et procédé de fabrication d' un tel rouleau

(30) Priorität: 02.06.1999 DE 19925420
(43) Veröffentlichungstag der Anmeldung: 06.12.2000
(73) Patentinhaber: Voith Paper Patent GmbH, 89522 Heidenheim (DE)
(72) Erfinder: Villiger, Patrick, 8307 Effretikon (CH)
(74) Vertreter: Manitz, Finsterwald & Partner

(56) Entgegenhaltungen:
- US-A- 4 390 599
- US-A- 4 576 845
- US-A- 5 023 985

## Beschreibung

Die vorliegende Erfindung betrifft eine Walze, insbesondere zum Glätten von Papierbahnen, mit einem insbesondere aus Metall bestehenden harten Walzenkern, der an seiner Außenseite mit einer ein elastisches Matrixmaterial umfassenden elastischen Bezugsschicht versehen ist. Weiterhin ist die Erfindung auf ein Verfahren zum Herstellen einer solchen Walze gerichtet.

Elastische Walzen dieser Art werden beispielsweise bei der Satinage von Papierbahnen verwendet. Dabei bildet jeweils eine elastische Walze zusammen mit einer harten Walze einen Preßspalt, durch den die zu bearbeitende Papierbahn hindurchgeführt wird. Während die harte Walze eine beispielsweise aus Stahl oder Hartguß bestehende sehr glatte Oberfläche besitzt und für die Glättung der ihr zugewandten Seite der Papierbahn zuständig ist, bewirkt die auf die gegenüberliegende Seite der Papierbahn einwirkende elastische Walze eine Vergleichmäßigung und Verdichtung der Papierbahn im Preßnip. Die Größenordnung der Walzen liegt bei Längen von 3 bis 12 m bzw. Durchmessern von 450 bis 1500 mm. Sie halten Linienkräften bis zu 600 N/mm und Druckspannungen bis 130 N/mm² stand.

Da die Tendenz bei der Papierherstellung dahin geht, daß die Satinage im Online-Betrieb erfolgt, d.h. daß die die Papiermaschine oder Streichmaschine verlassende Papierbahn unmittelbar durch die Papierglättvorrichtung (Kalander) geführt wird, werden an die Walzen der Glättvorrichtung insbesondere bezüglich der Temperaturbeständigkeit höhere Anforderungen als bisher gestellt. Durch die im Online-Betrieb erforderlichen hohen Transportgeschwindigkeiten der Papierbahn und die damit verbundenen hohen Rotationsgeschwindigkeiten der Kalanderwalzen wird deren Nipfrequenz, das ist die Frequenz, mit der der Bezug komprimiert und wieder entlastet wird, erhöht, was wiederum zu erhöhten Walzentemperaturen führt. Diese im Online-Betrieb entstehenden hohen Temperaturen führen zu Problemen, die bei bekannten elastischen Walzen bis zur Zerstörung des Kunststoffbelages führen können. Zum einen sind bei bekannten Kunststoffbelägen maximale Temperaturdifferenzen von ca. 20°C über die Breite der Walze zulässig und zum anderen besitzen die für die Beschichtung üblicherweise verwendeten Kunststoffe einen wesentlich höheren Temperaturausdehnungskoeffizienten als die üblicherweise verwendeten Stahlwalzen bzw. Hartgußwalzen, so daß durch eine Temperaturerhöhung hohe axiale Spannungen zwischen der Stahlwalze bzw. Hartgußwalze und der mit ihr verbundenen Kunststoffbeschichtung auftreten.

Durch diese hohen Spannungen verbunden mit insbesondere punktuell auftretenden Erhitzungsstellen innerhalb der Kunststoffbeschichtung können sogenannte Hot-Spots auftreten, an denen ein Ablösen oder sogar ein Aufplatzen der Kunststoffschicht erfolgt.

Diese Hot-Spots treten insbesondere dann auf, wenn zusätzlich zu den mechanischen Spannungen und der relativ hohen Temperatur Kristallisierungspunkte in Form von beispielsweise fehlerhaften Klebungen, Ablagerungen oder überdurchschnittlichen Einbuchtungen des elastischen Belages, beispielsweise durch Falten oder Fremdkörper an der Papierbahn, vorhanden sind. In diesen Fällen kann die Temperatur an diesen Kristallisierungspunkten von üblichen 80°C bis 90°C bis auf über 150°C steigen, wodurch die erwähnte Zerstörung der Kunststoffschicht erfolgt.

Eine Walze, deren elastische Bezugsschicht mit einer zusätzlichen Metallbeschichtung versehen ist, ist aus der DE-A-4126232 bekannt. Durch die metallische Deckschicht wird die Wärmeleitfähigkeit der Außenseite der Walze erhöht, so daß innerhalb des Preßspalts auftretende unerwünschte Hitze schnell abgeführt werden kann und die Temperatur während der Behandlung der Warenbahn im wesentlichen konstant gehalten werden kann.

Problematisch an einer metallischen Bezugsschicht ist, daß beim Auftreten von Störungsstellen innerhalb des Preßspaltes, beispielsweise durch Verunreinigungen in der Warenbahn, durch in den Preßspalt eindringende Fremdkörper oder durch Falten in der Warenbahn, in der metallischen Bezugsschicht Eindrückungen oder Vertiefungen entstehen können, die unter Umständen irreversibel sind. Diese Vertiefungen bilden Störungsstellen in der hochpolierten Oberfläche der elastischen Walze dar und führen zu Unregelmäßigkeiten in der Oberfläche der geglätteten Warenbahn, die als Markierungen bezeichnet werden.

Es ist eine Aufgabe der vorliegenden Erfindung eine Walze der eingangs genannten Art anzugeben, die zumindest an ihrer Oberfläche eine gute Wärmeleitfähigkeit besitzt und bei der die Gefahr des Auftretens von Markierungen verhindert wird. Weiterhin soll ein Verfahren zum Herstellen einer solchen Walze angegeben werden.

Der die Walze betreffende Teil der Aufgabe wird erfindungsgemäß ausgehend von einer Walze der eingangs genannten Art dadurch gelöst, daß das Matrixmaterial an seine Außenseite mit Memory-Metall beschichtet ist. Ein entsprechendes erfindungsgemäßes Verfahren ist dadurch gekennzeichnet, daß auf die Bezugsschicht, d.h. auf die Außenseite des Matrixmaterials, zumindest eine Schicht aus Memory-Metall aufgebracht wird.

Durch die Verwendung von Memory-Metall als Deckschicht der elastischen Bezugsschicht wird erreicht, daß im Betrieb an Störstellen auftretende Vertiefungen der Deckschicht reversibel sind und somit eine Selbstheilung der Oberfläche der elastischen Walze gegeben ist. Memory-Metall, das auch als Formgedächtnis-Legierung bezeichnet wird, besitzt die Eigenschaft, bei Erhitzung über eine bestimmte Temperatur eine vorgegebene, in dem Metall gespeicherte Form anzunehmen. Erfindungsgemäß ist es daher möglich, die Deckschicht aus Memory-Metall so herzustellen, daß die Deckschicht bei den im Glättbetrieb auftretenden Temperaturen ihre vordefinierte, konzentrische Form mit extrem glatter Oberfläche über ihre gesamte Ausdehnung annimmt. Entsteht aufgrund eines Störeinflusses eine Vertiefung in der Deckschicht, so nimmt diese nach Entfernen der Störung, beispielsweise nach Durchlaufen des Fremdkörpers, der Verunreinigung der Papierbahn oder einer Falte in der Papierbahn, wieder die ihr einprägte Form an. Die Vertiefung in der Oberfläche der Deckschicht verschwindet somit automatisch aufgrund des Memory-Effekts, so daß nach Durchlaufen der Störungsstelle die Oberfläche der elastischen Walze wieder optimal glatt ausgebildet ist.

Es ist auch denkbar, daß die Temperatur, bei der die Formgedächtnis-Legierung ihre eingeprägte Form wieder annimmt, höher gewählt wird als die Betriebstemperatur im Preßspalt. In diesem Fall werden im Betrieb auftretende Vertiefungen in der Deckschicht nicht während des laufenden Betriebs automatisch repariert, sondern es ist möglich, nach Stillsetzen der Walze die Deckschicht auf die erforderliche Temperatur zu bringen, so daß insbesondere ohne Ausbau der Walze aus dem Glättwerk durch diese Temperaturerhöhung eine Reparatur der Deckschicht möglich ist.

Durch die metallische Deckschicht wird zusätzlich erreicht, daß an der Außenseite der elastischen Walze eine sehr gute Wärmeleitfähigkeit vorhanden ist, so daß im Preßspalt auftretende unerwünschte Hitze schnell nach außen abgeführt werden kann. Dadurch ist gewährleistet, daß die Temperatur während der Behandlung der Warenbahn im Preßspalt im wesentliche konstant gehalten werden kann.

Nach einer Ausführungsform der Erfindung besteht die Memory-Metallschicht aus einer Nickel-Titan-Legierung. Grundsätzlich ist für die Herstellung der Deckschicht jedoch auch jede andere Formgedächtnis-Legierung geeignet, solange mit ihr die gewünschte Glätte der Oberfläche der elastischen Walze erreicht werden kann. Vorteilhaft soll dabei die Temperatur, bei der die Formgedächtnis-Legierung die ihr eingeprägte Form annimmt, unterhalb der Betriebstemperatur im Preßnip liegen, um die erwähnte automatische Selbstheilung zu ermöglichen.

Nach einer weiteren bevorzugten Ausführungsform der Erfindung besitzt die Memory-Metallschicht ein radiale Dicke von zwischen ca. 2 µm und 30 µm, bevorzugt von zwischen ca. 5 µm und 10 µm. Mit den angegebenen Dickewerten ist gewährleistet, daß die Walze trotz der aus Metall bestehenden Deckschicht die erforderlich Elastizität für den Glättvorgang besitzt.

Nach einer weiteren vorteilhaften Ausführungsform der Erfindung besitzt die Oberfläche der Memory-Metallschicht eine Ra-Wert, der kleiner als 0.05 µm, insbesondere kleiner 0.03 µm ist. Mit den angegebenen Ra-Werten wird eine Oberflächengüte der elastischen Walze erreicht, die deutlich höher ist als bei Walzen, die lediglich eine Kunststoffoberfläche besitzen. Auf diese Weise kann das Glättergebnis gegenüber diesen Walze deutlich verbessert werden.

Vorteilhaft sind in dem Matrixmaterial Füllstoffe eingebettet. Durch diese Füllstoffe, die beispielsweise pulverförmig und/oder faserförmig ausgebildet sein können, können die Eigenschaften der elastischen Bezugsschicht gesteuert werden. Je nach Menge und physikalischen Eigenschaften dieser Füllstoffe werden die physikalischen Eigenschaften der elastischen Bezugsschicht dominiert bzw. beeinflußt. Die Füllstoffe können beispielsweise eine größere Steifigkeit besitzen als das Matrixmaterial, wodurch die Steifigkeit der elastischen Bezugsschicht eingestellt werden kann. Weiterhin können die Füllstoffe eine Wärmeleitfähigkeit besitzen, die größer ist als die Wärmeleitfähigkeit des Matrixmaterials, wodurch die Wärmeleitfähigkeit der elastischen Bezugsschicht verbessert werden kann. In Verbindung mit der guten Wärmeleitfähigkeit der metallischen Deckschicht kann somit auch unerwünschte Hitze, die innerhalb des Matrixmaterials auftritt, schnell und sicher abgeführt werden.

Weiterhin kann nach einer vorteilhaften Ausführungsform der Erfindung der Wärmeausdehnungskoeffizient der Füllstoffe kleiner sein als der Wärmeausdehnungskoeffizient des Matrixmaterials und insbesondere kann er im wesentliche gleich groß wie der Wärmeausdehnungskoeffizient des Walzenkerns sein. Dadurch wird erreicht, daß der Gesamtwärmeausdehnungskoeffizient der elastischen Bezugsschicht gegenüber dem Wärmeausdehnungskoeffizienten des Matrixmaterials verringert wird, so daß die aufgrund der im Betrieb auftretenden Wärme entstehenden Längsspannungen zwischen dem Walzenkern und der elastischen Bezugsschicht verringert werden.

Die Füllstoffe können bevorzugt aus Kohlenstoff und/oder aus Glas und/oder aus Metall bestehen. Weiterhin können sie vorteilhaft als Fasern oder als Rovings ausgebildet sein und zumindest ein Teil der Fasern kann in axialer Richtung und/oder radialer Richtung oder statistisch verteilt ausgerichtet sein. Je nach Wahl des Materials sowie der Ausrichtung der Fasern kann beispielsweise die Steifigkeit bzw. die Elastizität der Bezugsschicht über die Füllstoffe, insbesondere über die Fasern eingestellt werden. Die Fasern können in einer oder mehreren insbesondere konzentrisch angeordneten Faserlagen angeordnet sein und es weiterhin möglich, daß weitere Füllstoffe, insbesondere in Form von Fasern oder Pulver in dem Matrixmaterial angeordnet sind, um die physikalischen Eigenschaften der Bezugsschicht in gewünschter Weise zu beeinflußen.

Zur Erzeugung der Memory-Metallschicht wird vorteilhaft zumindest eine aus einer Vielzahl von Memory-Metallfasern oder von mit Memory-Metall beschichteten Fasern bestehendes Faserbündel, insbesondere in mehreren Faserlagen übereinander, auf die Bezugsschicht gewickelt. Dabei wird bevorzugt das Faserbündel durch einen oder mehrere Faserrovings und/oder durch ein Faservlies gebildet, wobei ein Roving jeweils aus einer Vielzahl von nebeneinanderliegenden Fasern der gleichen Art besteht. Die Beschichtung des Faserbündels oder der einzelnen Fasern kann vor dem Aufwickeln auf die Bezugsschicht insbesondere dadurch erreicht werden, daß das Faserbündel oder die einzelnen Fasern durch ein Memory-Metallbad gezogen werden. Grundsätzlich ist es jedoch auch möglich, daß das Faserbündel oder die Fasern im wesentlichen trocken auf die Bezugsschicht aufgewickelt werden und während oder nach dem Aufwickeln mit dem Memory-Metall beschichtet bzw. beaufschlagt werden. Als Fasern können z.B. weiche synthetische Fasern, beispielsweise aus Aramid, verwendet werden.

Neben der Aufbringung der Memory-Metallschicht über Fasern oder Faserbündel ist es auch möglich, die Deckschicht in einer anderen Weise, beispielsweise durch Aufdampfen, Spritzen oder dergleichen aufzubringen.

Vorteilhaft wird nach Aufbringen des Metalls auf die Bezugsschicht die Oberfläche der Memory-Metallschicht geschliffen und gegebenenfalls poliert. Auf diese Weise kann eine extrem glatte Oberfläche der elastischen Walze erreicht werden.

Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnung näher beschrieben; in dieser zeigen:
- Fig. 1: einen schematischen Querschnitt durch eine erfindungsgemäß ausgebildete elastische Walze sowie eine mit dieser zusammenwirkende harte Walze und eine zwischen den Walzen angeordnete Papierbahn und
- Fig. 2: eine Detailansicht der Vorrichtung nach Figur 1 mit einem im Preßspalt angeordneten Fremdkörper.

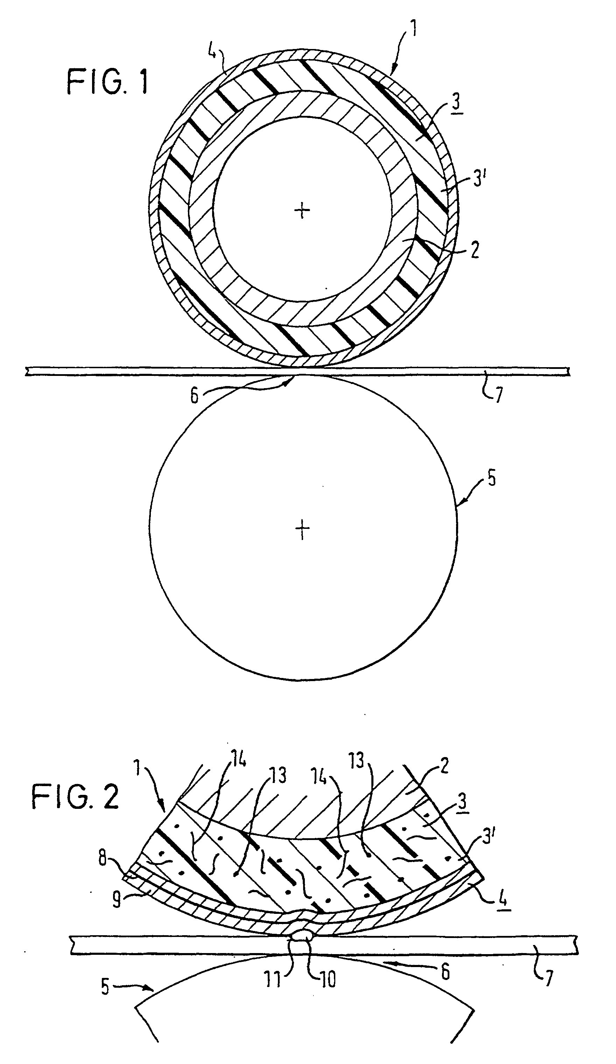

Fig. 1 zeigt eine erfindungsgemäß ausgebildete elastische Walze 1, die einen beispielsweise aus Stahl oder Hartguß bestehenden Walzenkern 2, eine aus einem elastischen Matrixmaterial 3', beispielsweise aus einem elastischen Kunststoff wie einer Harz-Härter-Kombination bestehende elastische Bezugsschicht 3 sowie eine auf deren Oberfläche aufgebrachte, aus einem Memory-Metall bestehende Deckschicht 4 umfaßt. Die Größenund Dickenverhältnisse der in Fig. 1 gezeigten Elemente entsprechend dabei nicht den tatsächlichen Verhältnissen, sondern wurden lediglich für eine günstige Darstellung entsprechend gewählt. So besitzt die Deckschicht 4 tatsächlich beispielsweise lediglich eine Dicke von 10 µm, so daß bei eine maßstabsgerechten Darstellung die Deckschicht 4 in der Fig. 1 nicht erkennbar wäre.

Unterhalb der elastische Walze 1 ist eine beispielsweise aus Stahl oder Hartguß bestehende harte Walze 5 angeordnet, die zusammen mit der elastische Walze 1 einen Preßspalt 6 bildet. Durch den Preßspalt 6 ist eine Materialbahn 7, beispielsweise eine Papierbahn geführt, deren Oberfläche durch den im Preßspalt 6 auftretenden Druck bevorzugt unter gleichzeitiger Wärmezufuhr geglättet wird.

In Fig. 2 ist zu erkennen, daß die Deckschicht 4 beispielsweise eine oder mehrere Faserlagen 8 umfassen kann, die jeweils aus mit Memory-Metall beschichteten Fasern oder Faserrovings bestehen. Die Beschichtung 9 der Faserlagen 8 besteht in diesem Fall aus Memory-Metall, so daß die Deckschicht 4 aus eine Kombination von Memory-Metallbeschichtung 9 und Faserlagen 8 besteht.

Weiterhin ist aus der in Fig. 2 dargestellten Detailansicht zu erkennen, daß in dem elastischen Matrixmaterial 3' der Bezugsschicht 3 pulverförmige Füllstoffe 13 sowie Fasern 14 eingebettet sind. Durch diese Füllstoffe 13, 14 kann beispielsweise die Steifigkeit der Bezugsschicht 3 eingestellt werden.

In Fig. 2 ist im Preßspalt 6 auf der Materialbahn 7 ein Fremdkörper 10 angeordnet, der eine Vertiefung 11 in der Deckschicht 4 erzeugt.

Würde die Vertiefung 11 irreversibel in der Deckschicht 4 erzeugt, so entstehen in der Oberfläche der Materialbahn 7 bei jedem Umlauf der elastische Walze 1 aufgrund der Vertiefung 11 Markierungen, die die Oberflächenqualität der geglätteten Materialbahn 7 verringern würden.

Bei der erfindungsgemäß ausgebildeten elastische Walze 1 kann die Vertiefung 11 dadurch eliminiert werden, daß die Deckschicht 4 auf eine Temperatur gebracht wird, die über der Temperatur liegt, bei der das Memory-Metall der Decksicht 4 die ihm eingeprägte Form annimmt. Je nach Wahl dieser Temperatur, die beispielsweise von dem verwendetem Memory-Metall abhängt, nimmt die Deckschicht 4 nach dem Erhitzen wieder ihre ursprüngliche konzentrische Zylinderform, ohne Vertiefung 11, ein. Dies kann wahlweise durch die im Glättbetrieb entstehende Hitze oder, nach Stillsetzen der Glättvorrichtung, in einem separaten Reparaturvorgang mit entsprechender Erhitzung erfolgen.

Auf diese Weise ist gewährleistet, daß Vertiefungen in der Deckschicht 4, die beispielsweise durch Fremdkörper, Falten in der Materialbahn oder sonstige Unregelmäßigkeiten in der Materialbahn erzeugt werden, nicht irreversibel sind, sondern automatisch oder mit geringem Aufwand durch eine lokale Reparatur insbesondere ohne Entnahme der elastische Walze 1 aus der Glättvorrichtung, eliminiert werden können, so daß die Oberfläche der elastische Walze 1 wieder die vorgegebene, gewünschte glatte Oberfläche besitzt.

### Bezugszeichenliste

- 1: elastische Walze
- 2: Walzenkern
- 3: elastische Bezugsschicht
- 3': Matrixmaterial
- 4: Deckschicht
- 5: harte Walze
- 6: Preßspalt
- 7: Materialbahn
- 8: Faserlagen
- 9: Beschichtung
- 10: Fremdkörper
- 11: Vertiefung

## Patentansprüche

1. Walze, insbesondere zum Glätten von Papierbahnen (7), mit einem insbesondere aus Metall bestehenden harten Walzenkern (2), der an seiner Außenseite mit einer ein elastisches Matrixmaterial (3') umfassenden elastischen Bezugsschicht (3) versehen ist,
**dadurch gekennzeichnet,**
**daß** das Matrixmaterial (3') an seiner Außenseite mit Memory-Metall (4, 9), das auch als Formgedächtnis - Legierung bezeichnet wird, beschichtet ist.

2. Walze nach Anspruch 1,
**dadurch gekennzeichnet,**
**daß** die Memory-Metallschicht (4, 9) aus einer Nickel-Titan-Legierung besteht und/oder
**daß** die Memory-Metallschicht (4, 9) eine radiale Dicke von zwischen
ca. 2 µm und 30 µm, bevorzugt von zwischen ca. 5 µm und 10 µm besitzt und/oder
**daß** die Oberfläche der Memory-Metallschicht (4, 9) einen Ra-Wert besitzt, der kleiner als 0.05 µm, insbesondere kleiner als 0.03 µm ist.

3. Walze nach Anspruch 1 oder 2,
**dadurch gekennzeichnet,**
**daß** in dem Matrixmaterial (3') Füllstoffe (13, 14) eingebettet sind.

4. Walze nach Anspruch 3,
**dadurch gekennzeichnet,**
**daß** die Füllstoffe (13, 14) eine größere Steifigkeit besitzen als das Matrixmaterial (3') und/oder
**daß** die Wärmeleitfähigkeit der Füllstoffe (13, 14) größer ist als die Wärmeleitfähigkeit des Matrixmaterials (3') und/oder
**daß** der Wärmeausdehnungskoeffizient der Füllstoffe (13, 14) kleiner ist als der Wärmeausdehnungskoeffizient des Matrixmaterials (3') und insbesondere im wesentlichen gleich groß wie der Wärmeausdehnungskoeffizient des Walzenkerns (2) ist und/oder
**daß** die Füllstoffe (13, 14) aus Kohlenstoff und/oder aus Glas und/oder aus Metall bestehen.

5. Walze nach Anspruch 3 oder 4,
**dadurch gekennzeichnet,**
**daß** die Füllstoffe als Fasern (14) oder als Rovings ausgebildet sind.

6. Walze nach Anspruch 5,
**dadurch gekennzeichnet,**
**daß** zumindest ein Teil, insbesondere ein überwiegender Teil der Fasern (14) in axialer Richtung ausgerichtet sind und/oder
**daß** zumindest ein Teil, insbesondere ein überwiegender Teil der Fasern (14) in radialer Richtung ausgerichtet sind und/oder
**daß** zumindest ein Teil, insbesondere ein überwiegender Teil der Fasern (14) statistisch verteilt ausgerichtet sind und/oder
**daß** die Fasern (14) in einer Faserlage (8) oder in radial aufeinanderfolgenden Faserlagen angeordnet sind.

7. Walze nach einem der Ansprüche 3 bis 6,
**dadurch gekennzeichnet,**
**daß** zusätzlich zu den Füllstoffen (13, 14) weitere Füllstoffe, insbesondere in Form von Fasern oder Pulver in dem Matrixmaterial angeordnet sind, insbesondere daß die weiteren Füllstoffe aus Quarz und/oder PTFE bestehen.

8. Walze nach einem der vorhergehenden Ansprüche,
**dadurch gekennzeichnet,**
**daß** das Matrixmaterial (3') ein Kunststoff, insbesondere ein Duroplast oder ein Thermoplast ist und/oder
**daß** das Matrixmaterial (3') eine Harz/Härter-Kombination ist.

9. Verfahren zum Herstellen einer elastischen Walze mit einem insbesondere aus Metall bestehenden harten Walzenkern, der mit einer ein elastisches Matrixmaterial umfassenden elastischen Bezugsschicht versehen ist, insbesondere zum Herstellen einer Walze nach einem der vorherigen Ansprüche,
**dadurch gekennzeichnet,**
**daß** auf die Bezugsschicht, d.h. auf die Außenseite des Matrixmaterials, zumindest eine Schicht aus Memory-Metall, das auch als Formgedächtnis-Legierung bezeichnet wird, aufgebracht wird.

10. Verfahren nach Anspruch 9,
**dadurch gekennzeichnet,**
**daß** zur Erzeugung der Memory-Metallschicht zumindest ein aus einer Vielzahl von Metallfasern oder von metallbeschichteten Fasern bestehendes Faserbündel, insbesondere in mehreren Faserlagen übereinander, auf die Bezugsschicht gewickelt wird.

11. Verfahren nach Anspruch 10,
**dadurch gekennzeichnet,**
**daß** das Faserbündel durch einen oder mehrere Faserrovings und/oder durch ein Faservlies gebildet wird, wobei ein Roving jeweils aus einer Vielzahl von nebeneinanderliegenden Fasern der gleichen Art besteht, und/oder
**daß** das Faserbündel oder die einzelnen Fasern vor dem Aufwickeln auf die Bezugsschicht mit Memory-Metall beschichtet werden, insbesondere durch ein Memory-Metallbad gezogen werden, oder daß das Faserbündel oder die Fasern im wesentlichen trocken auf die Bezugsschicht aufgewickelt werden und während oder nach dem Aufwickeln mit dem Memory-Metall beschichtet bzw. beaufschlagt werden.

12. Verfahren nach Anspruch 10 oder 11,
**dadurch gekennzeichnet,**
**daß** als Fasern weiche synthetische Fasern, beispielsweise aus Aramid, verwendet werden.

13. Verfahren nach einem der Ansprüche 9 bis 12,
**dadurch gekennzeichnet,**
**daß** nach Aufbringen des Metalls auf die Bezugsschicht die Oberfläche der Memory-Metallschicht geschliffen und insbesondere poliert wird und/oder
**daß** in das Matrixmaterial Füllstoffe, insbesondere Fasern oder Pulver, bevorzugt aus Kohlenstoff und/oder Glas, eingebettet werden.

## Claims

1. A roll, in particular for smoothing paper webs (7), comprising a hard roll core (2) consisting in particular of metal, which is provided at its outer side with an elastic cover layer (3) including an elastic matrix material (3'), **characterized in that** the matrix material (3') is coated with memory metal (4, 9), which is also called a shape memory alloy, at its outer side.

2. A roll in accordance with claim 1, **characterized in that** the memory metal layer (4, 9) consists of a nickel/titanium alloy; and/or
**in that** the memory metal layer (4, 9) has a radial thickness from between approximately 2 µm and 30 µm, preferably from between approximately 5 µm and 10 µm ; and/or
**in that** the surface of the memory metal layer (4, 9) has an Ra value which is smaller than 0.05 µm, in particular smaller than 0.03 µm.

3. A roll in accordance with claim 1 or claim 2, **characterized in that** fillers (13, 14) are embedded in the matrix material (3').

4. A roll in accordance with claim 3, **characterized in that** the fillers (13, 14) have a greater stiffness than the matrix material (3'); and/or
**in that** the thermal conductivity of the fillers (13, 14) is larger than the thermal conductivity of the matrix material (3'); and/or
**in that** the thermal expansion coefficient of the fillers (13, 14) is smaller-than the thermal expansion coefficient of the matrix material (3') and is in particular substantially of the same magnitude as the thermal expansion coefficient of the roll core (2); and/or
**in that** the fillers (13, 14) consist of carbon and/or of glass and/or of metal.

5. A roll in accordance in accordance with claim 3 or claim 4, **characterized in that** the fillers are formed as fibers (14) or rovings.

6. A roll in accordance with claim 5, **characterized in that** at least a portion, in particular a predominant portion, of the fibers (14) is oriented in the axial direction; and/or
**in that** at least a portion, in particular a predominant portion, of the fibers (14) is oriented in the radial direction; and/or
**in that** at least a portion, in particular a predominant portion, of the fibers (14) is oriented by statistical distribution; and/or
**in that** the fibers (14) are arranged in a fiber layer (8) or in radially sequential fiber layers.

7. A roll in accordance with any one of claims 3 to 6, **characterized in that**, in addition to the fillers (13, 14), further fillers, in particular in the form of fibers or of powder, are arranged in the matrix material; in particular **in that** the further fillers consist of quartz and/or of FIFE.

8. A roll in accordance with any one of the preceding claims, **characterized in that** the matrix material (3') is a plastic, in particular a thermosetting plastic or a thermoplastic; and/or
**in that** the matrix material (3') is a resin/hardener combination.

9. A method for the production of an elastic roll comprising a hard roll core, consisting in particular of metal, which is provided with an elastic cover layer including an elastic matrix material, in particular for the production of a roll in accordance with any one of the preceding claims, **characterized in that** at least one layer of memory metal, which is also called a shape memory alloy, is applied to the cover layer, i.e. to the outer side of the matrix material.

10. A method in accordance with claim 9, **characterized in that** at least one fiber bundle consisting of a plurality of metal fibers or of metal-coated fibers, is wound onto the cover layer, in particular in a plurality of fiber layers on top of one another, to produce the memory metal coating.

11. A method in accordance with claim 10, **characterized in that** the fiber bundle is formed by one or more fiber rovings and/or by a fiber fleece, wherein each roving consists of a plurality of adjacently disposed fibers of the same kind; and/or
**in that** the fiber bundle or the individual fibers are coated with memory metal before the winding onto the cover layer, in particular by being drawn through a memory metal bath; or **in that** the fiber bundle or the fibers are wound onto the cover layer substantially dry and are coated with memory metal or have it applied to them during or after the winding.

12. A method in accordance with claim 10 or claim 11, **characterized in that** soft synthetic fibers, for example of aramide, are used as the fibers.

13. A method in accordance with any one of claims 9 to 12, **characterized in that**, after application of the metal to the cover layer, the surface of the memory metal layer is ground and, in particular polished; and/or
**in that** fillers, in particular fibers or powder, preferably of carbon and/or of glass, are embedded in the matrix material.

## Revendications

1. Rouleau, en particulier destiné à lisser les bandes de papier (7), ayant en particulier un noyau dur de rouleau (2) composé de métal, qui est pourvu sur son côté extérieur d'une couche de référence (3) élastique entourant une matière de matrice élastique (3'),
**caractérisé en ce que**
la matière de matrice (3') est recouverte sur son côté extérieur d'un métal à mémoire (4, 9) qui est également qualifié d'alliage à mémoire de forme.

2. Rouleau selon la revendication 1,
**caractérisé en ce que**
la couche de métal à mémoire (4, 9) est composée d'un alliage en nickel-titane et/ou
**en ce que** la couche de métal à mémoire (4, 9) présente une épaisseur radiale située entre environ 2 µm et 30 µm, de préférence, entre environ 5 µm et 10 µm et/ou
**en ce que** la surface supérieure de la couche de métal à mémoire (4, 9) présente une valeur en radium qui est inférieure à 0,05 µm, en particulier inférieure à 0,03 µm.

3. Rouleau selon la revendication 1 ou 2,
**caractérisé en ce que**
des matières de remplissage (13, 14) sont intégrées dans la matière de matrice (3').

4. Rouleau selon la revendication 3,
**caractérisé en ce que**
les matières de remplissage (13, 14) présentent une raideur plus grande que celle de la matière de matrice (3') et/ou
**en ce que** la conduction thermique des matières de remplissage (13, 14) est plus grande que la conduction thermique de la matière de matrice (3') et/ou
**en ce que** le coefficient d'expansion thermique des matières de remplissage (13, 14) est plus petit que le coefficient d'expansion thermique de la matière de matrice (3'), et en particulier essentiellement aussi grand que le coefficient d'expansion thermique du noyau du rouleau (2) et/ou
**en ce que** les matières de remplissage (13, 14) sont composées de carbone et/ou de verre et/ou de métal.

5. Rouleau selon la revendication 3 ou 4,
**caractérisé en ce que**
les matières de remplissage sont formées en tant que fibres (14) ou en tant que stratifils.

6. Rouleau selon la revendication 5,
**caractérisé en ce que**
au moins une partie, en particulier une partie principale des fibres (14) sont orientées dans la direction axiale et/ou
**en ce qu'**au moins une partie, en particulier une partie principale des fibres (14) est orientée dans la direction radiale et/ou
**en ce qu'**au moins une partie, en particulier une partie principale des fibres (14) est orientée répartie de manière statistique et/ou
**en ce qu'**au moins les fibres (14) sont disposées dans une position de fibre (8) ou dans des positions de fibres consécutives de manière radiale.

7. Rouleau selon les revendications 3 à 6,
**caractérisé en ce que**
d'autres matières de remplissage en plus des matières dé remplissage (13, 14), sont disposées en particulier sous forme de fibres ou de poudre dans la matière de matrice, en particulier **en ce que** les autres matières de remplissage sont composées de quartz et/ou de PTFE (polytétrafluoréthylène).

8. Rouleau selon l'une quelconque des revendications précédentes,
**caractérisé en ce que**
la matière de matrice (3') est une matière plastique, en particulier une résine thermodurcissable ou une matière thermoplastique et/ou
**en ce que** la matière de matrice (3') est une combinaison de résine/agent de durcissement.

9. Procédé destiné à la fabrication d'un rouleau élastique ayant en particulier un noyau dur de rouleau composé de métal, qui est pourvu d'une couche de référence élastique entourant une matière de matrice élastique, en particulier pour fabriquer un rouleau selon l'une quelconque des revendications précédentes,
**caractérisé en ce que**
sur la couche de référence, c'est-à-dire, le côté extérieur de la matière de matrice, au moins une couche de métal à mémoire, qui est également qualifié d'alliage à mémoire de forme, est appliquée.

10. Procédé selon la revendication 9,
**caractérisé en ce que**
la couche de métal à mémoire destinée à la production d'au moins un faisceau de fibres composé d'une pluralité de fibres métalliques ou de fibres recouvertes de métal, est enroulée sur la couche de référence, en particulier dans plusieurs positions de fibres superposées.

11. Procédé selon la revendication 10,
**caractérisé en ce que**
le faisceau de fibres est formé par un ou plusieurs stratifils de fibres et/ou un voile de fibres, moyennant quoi, un stratifil est chaque fois composé d'une pluralité de fibres juxtaposées de même type, et/ou
**en ce que** le faisceau de fibres ou les fibres individuelles sont recouvertes de métal à mémoire avant l'enroulement sur la couche de référence, sont passées en particulier dans un bain de métal à mémoire, ou **en ce que** le faisceau de fibres ou les fibres sont enroulées essentiellement sèches sur la couche de référence et qu'elles sont, pendant ou après l'enroulement, recouvertes ou injectées de métal à mémoire.

12. Procédé selon la revendication 10 ou 11,
**caractérisé en ce que**
des fibres synthétiques moelleuses, par exemple en aramide, sont utilisées en tant que fibres

13. Procédé selon l'une quelconque des revendications 9 à 12,
**caractérisé en ce que**
après l'application du métal sur la couche de référence, la surface supérieure de la couche de métal à mémoire est rectifiée et en particulier polie et/ou
**en ce que** les matières de remplissage, en particulier les fibres ou la poudre, de préférence en carbone et/ou en verre, sont intégrées dans la matière de matrice.
